# FASCICULE DE BREVET EUROPEEN

(11) **EP 1 250 621 B1**
(45) Date de publication et mention de la délivrance du brevet: **25.02.2009**
(21) Numéro de dépôt: 01983637.8
(22) Date de dépôt: 26.10.2001
(51) Int. Cl.: G02B 27/01

(54) **COMBINEUR GLACE DOUBLE POUR VISEUR TETE HAUTE**
DOPPELTE GLASPLATTE ZUR STRAHLENZUSAMMENFÜHRUNG FÜR EINE HEAD-UP-VISIERVORRICHTUNG
DOUBLE-MIRROR COMBINING GLASS FOR HEAD-UP DISPLAY

(30) Priorité: 03.11.2000 FR 0014127
(43) Date de publication de la demande: 23.10.2002
(73) Titulaire: Thales, 75008 Paris (FR)
(72) Inventeur: DARRIEUX, Jean-Marc, Thales Intellectual Property, F-94117 Arcueil Cedex (FR); CHEVREAU, Yannick, Thales Intellectual Property, F-94117 Arcueil Cedex (FR); GOMME, Jean-François, Thales Intellectual Property, F-94117 Arcueil Cedex (FR)
(74) Mandataire: Beylot, Jacques
(86) Numéro de dépôt international: PCT/FR2001/003342
(87) Numéro de publication internationale: WO 2002/037167

(56) Documents cités:
- EP-A1- 0 459 850
- WO-A2-87/01211
- US-A- 4 099 841
- US-A- 4 655 540
- PLANTIER D ET AL: "AN AVIONIC FULL-COLOR COLLIMATED HEAD LEVEL DISPLAY" SID INTERNATIONAL SYMPOSIUM DIGEST OF TECHNICAL PAPERS. ANAHEIM, MAY 6 - 10, 1991, PLAYA DEL REY, SID, US, vol. 22, 6 mai 1991 (1991-05-06), pages 123-126, XP000503018 ISSN: 0097-966X

## Description

L'invention concerne le domaine des combineurs glace double pour viseur tête haute, et notamment pour viseur tête haute monté dans l'habitacle d'un aéronef de préférence du type avion. La fonction du combineur de viseur tête haute est généralement de superposer à la vision du paysage extérieur par le pilote la vision simultanée d'images synthétiques préférentiellement collimatées à l'infini. Les images synthétiques destinées à être superposées au paysage extérieur par l'intermédiaire du combineur sont générées par le viseur tête haute. Un combineur glace double est un type de combineur comportant deux glaces et ayant l'avantage, par rapport à un combineur à une seule glace, d'augmenter la taille en site du champ instantané dans lequel peuvent s'afficher les images synthétiques destinées à être vues par le pilote.

Selon un art antérieur, il existe un combineur glace double, d'une part dont les deux glaces sensiblement parallèles sont maintenues par une paire d'entretoises dont le plan moyen est orthogonal au plan moyen des glaces, et d'autre part pour lequel la dimension, d'une entretoise à l'autre, est la même pour les deux glaces. Un inconvénient de cet art antérieur est de présenter un masque visuel qui est gênant pour le pilote.

Un combineur glace double est décrit dans US 4,655,540. Un autre combineur est décrit dans "An avionic Full-Color Collimated Head Level Display", Denis Plantier, SID 91 Digest, vol 22, pages 123-126.

Une première solution non revendiquée consisterait à remplacer le matériau opaque constituant la structure de maintien des glaces par un matériau transparent dans le domaine du visible.

Une deuxième solution non revendiquée consisterait à utiliser des entretoises peu volumineuses, par exemple fines et trouées, et dont la structure propre présenterait un masque visuel suffisamment faible.

Une troisième solution revendiquée consiste en une nouvelle structure du combineur, dans laquelle sont notamment modifiées la taille relative des glaces et l'inclinaison des entretoises de la structure de maintien des glaces, de manière à pouvoir à la fois d'une part assurer un maintien stable et rigide des deux glaces dans un environnement vibratoire qui peut être sévère et d'autre part diminuer substantiellement le masque visuel lié à la structure de maintien des glaces, masque visuel qui est gênant pour le pilote. La nouvelle structure du combineur selon l'invention permet également d'atténuer voire de supprimer les réflexions parasites ayant lieu sur certaines surfaces des entretoises dans les combineurs de l'art antérieur, grâce à la nouvelle inclinaison des entretoises de la structure de maintien. Ces réflexions parasites sur les entretoises peuvent également être gênantes pour le pilote.

Selon l'invention, il est prévu un combineur glace double pour viseur tête haute, comportant deux glaces sensiblement planes, sensiblement parallèles entre elles, et fixement maintenues entre elles par une structure de maintien qui comprend une embase centrale, deux flancs latéraux reliés à l'embase centrale, deux entretoises respectivement reliées aux flancs latéraux et enserrant entre elles les deux glaces, une glace externe étant enserrée entre les extrémités libres des entretoises, une glace interne étant enserrée entre les extrémités, reliées aux flancs latéraux, des entretoises, l'ensemble constitué par les glaces, les flancs latéraux et les entretoises, présentant un plan de symétrie sensiblement orthogonal au plan moyen des glaces, caractérisé en ce que la dimension, d'une entretoise à l'autre, de la glace externe est plus grande que la dimension, d'une entretoise à l'autre, de la glace interne, et en ce que le plan moyen de chaque entretoise est non orthogonal au plan moyen des glaces.

L'invention sera mieux comprise et d'autres particularités et avantages apparaîtront à l'aide de la description ci-après et des dessins joints, donnés à titre d'exemples, où :
- la figure 1 représente schématiquement une vue de profil d'une partie d'un aéronef dont l'habitacle comporte un viseur tête haute et un combineur glace double selon l'invention ;
- les figures 2 et 3 représentent schématiquement des vues en perspective d'un combineur selon l'invention, la figure 3 étant vue plutôt du côté de l'oeil du pilote et la figure 2 étant vue plutôt du côté du paysage extérieur ;
- les figures 4 et 5 représentent schématiquement des vues de dessus d'un combineur selon l'invention, mettant en évidence la diminution du masque visuel vu par le pilote qui a été obtenue.

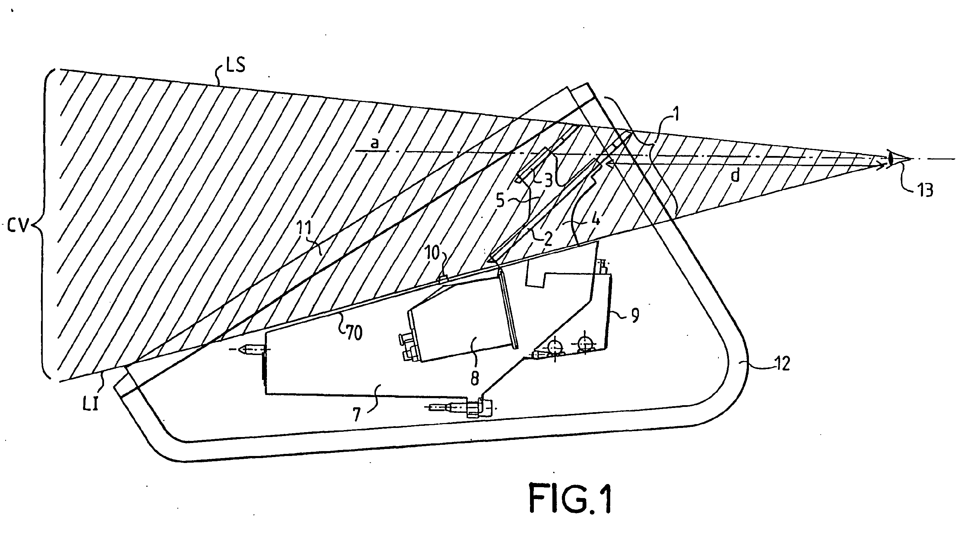

La figure 1 représente schématiquement une vue de profil d'une partie d'un aéronef dont l'habitacle comporte un viseur tête haute et un combineur glace double selon l'invention. L'habitacle de l'aéronef comporte une armature 12 et un pare-brise 11 au travers duquel pare-brise 11 l'oeil 13 du pilote peut observer une portion du paysage extérieur correspondant au champ CV de vision externe. L'axe a représente l'axe de vision du pilote « à l'horizontale ». Le champ CV de vision externe du pilote, représenté par des hachures, comporte, en site, une limite supérieure LS et une limite inférieure LI. Un viseur 7 tête haute est monté dans l'habitacle et comporte un combineur 1 glace double dont la structure, généralement opaque, de maintien des glaces constitue toujours une partie importante du masque visuel qui est gênant pour le pilote. De préférence, le seul élément du viseur 7 tête haute qui est situé dans le champ CV de vision externe du pilote est le combineur 1 glace double ; la surface supérieure 70 du viseur 7 tête haute est alors située au niveau ou sous la limite inférieure LI du champ CV de vision externe. L'essentiel du masque visuel gênant pour le pilote est alors constitué par le combineur 1 glace double et plus précisément par sa structure de maintien des glaces. Le combineur 1 glace double comprend une embase centrale non représentée sur la figure 1, une glace interne 2, une glace externe 3, le plan moyen des glaces interne 2 et externe 3 étant orthogonal au plan de la figure 1, deux flancs latéraux 4 dont un seul est visible sur la figure 1, deux entretoises 5 dont une seule est visible sur la figure 1. Au viseur 7 tête haute, sont associés d'autres éléments comme par exemple une cellule 10 d'asservissement de la luminosité des images synthétiques en fonction de la luminosité du paysage extérieur, deux visualisations 8 latérales présentant au pilote des informations non collimatées à l'infini, une seule visualisation 8 latérale étant visible sur la figure 1, un panneau 9 de commande. Des images synthétiques collimatées à l'infini, issues du viseur 7 tête haute, sont réfléchies sur les deux glaces qui sont partiellement transparentes et partiellement réfléchissantes dans le domaine spectral du visible, et viennent sur l'oeil du pilote. Ainsi, en regardant à travers le combineur 1 glace double, le pilote peut voir le paysage extérieur superposé à la symbologie que constituent les différentes images synthétiques collimatées à l'infini. La distance d de l'oeil 13 du pilote à la glace interne 2 du combineur 1 glace double est par exemple d'environ 30cm à 40cm.

Le combineur glace double pour viseur tête haute, comporte deux glaces sensiblement planes, c'est-à-dire suffisamment planes pour que la symbologie réfléchie par ces glaces ne soit pas déformée, de manière à ne pas dégrader substantiellement la vision du pilote. Les glaces sont sensiblement parallèles entre elles, c'est-à-dire suffisamment parallèles entre elles pour que la symbologie n'apparaisse pas dédoublée aux yeux du pilote ce qui dégraderait fortement la vision du pilote. Les glaces sont fixement maintenues entre elles par une structure de maintien, de manière à rester substantiellement immobiles par rapport au viseur tête haute et donc par rapport à l'habitacle de l'aéronef. La structure de maintien des glaces comprend une embase centrale reliant le combineur à la structure porteuse du viseur tête haute. A l'embase centrale sont reliés deux flancs latéraux. A chaque flanc latéral est reliée une entretoise. La glace externe est enserrée entre les extrémités libres des deux entretoises et la glace interne est enserrée entre les extrémités, reliées aux flancs latéraux, des deux entretoises. Au moins l'ensemble constitué par les glaces, les flancs latéraux et les entretoises, présente un plan de symétrie sensiblement orthogonal au plan moyen des glaces. Par exemple sur la figure 1, ce plan de symétrie est le plan de la figure 1. La dimension, d'une entretoise à l'autre, de la glace externe est plus grande que la dimension, d'une entretoise à l'autre, de la glace interne. Les entretoises, au moins au niveau de leur partie centrale, c'est-à-dire hors de leurs extrémités qui enserrent les glaces, présentent une forme de plaque suffisamment plane pour présenter un plan moyen, ceci afin de minimiser le masque visuel créé par les entretoises. Le plan moyen de chaque entretoise est non orthogonal au plan moyen des glaces. Grâce à la différence de taille des dimensions des glaces d'une entretoise à l'autre et grâce à l'inclinaison non orthogonale du plan moyen de chaque entretoise par rapport au plan moyen des glaces, les entretoises sont respectivement placées de manière à être cachées dans une proportion importante au regard du pilote par les flancs latéraux auxquels lesdites entretoises sont reliées. La réduction du masque visuel gênant pour le pilote peut ainsi atteindre 60% du masque visuel existant avec des combineurs glace double standard de l'art antérieur. De plus, grâce à l'inclinaison du plan moyen de chacune des entretoises, les entretoises n'étant plus vues ou presque plus vues par le pilote, les réflexions parasites issues par exemple de sources lumineuses situées sur la piste lors de la phase d'atterrissage ne sont plus dirigées vers l'oeil du pilote. Les réflexions parasites dirigées vers l'oeil du pilote ont donc été supprimées ou à tout le moins fortement atténuées.

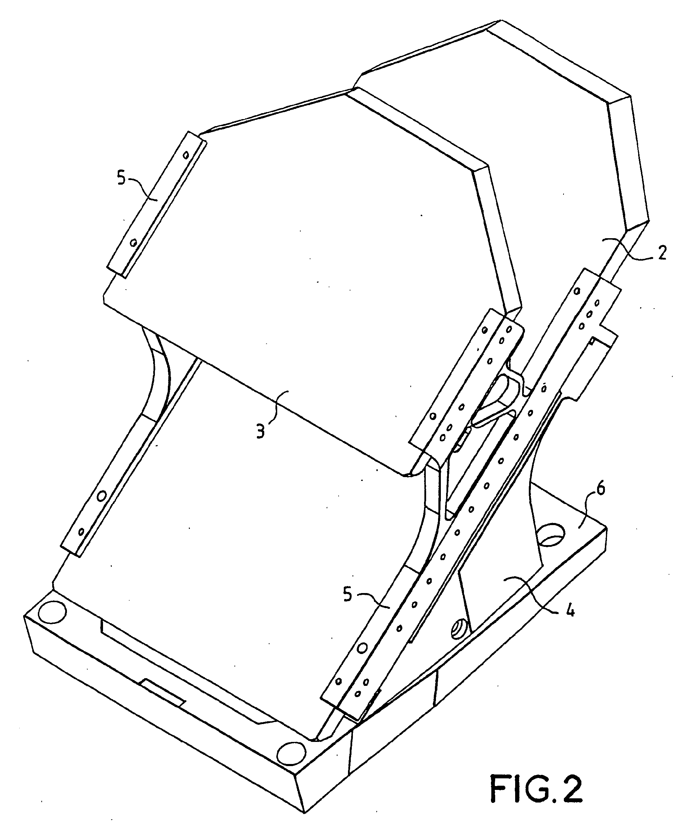

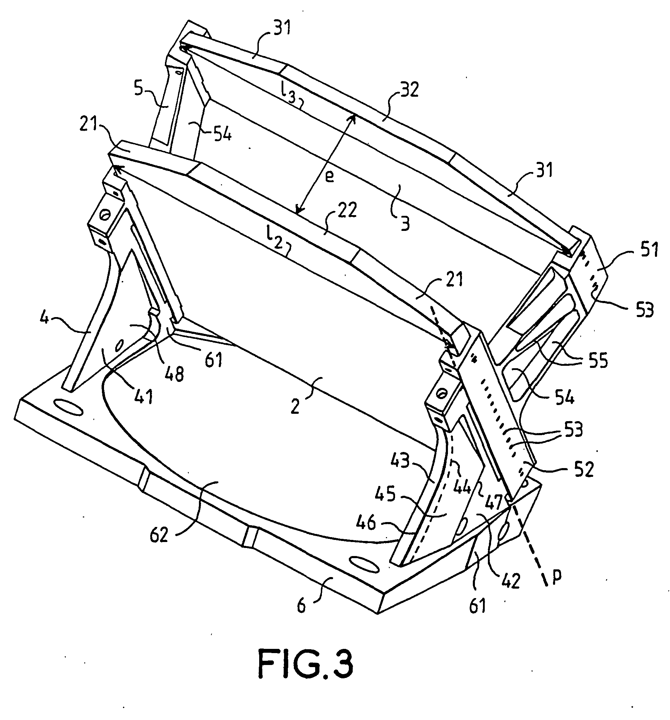

Les figures 2 et 3 représentent schématiquement des vues en perspective d'un combineur selon l'invention, la figure 3 étant vue plutôt du côté de l'oeil du pilote et la figure 2 étant vue plutôt du côté du paysage extérieur. Sur la figure 2, seules les principales parties du combineur glace double sont représentées, tandis que sur la figure 3 les différentes parties du combineur sont décrites plus précisément. Le combineur 1 glace double représenté sur la figure 2 comporte deux glaces, une glace interne 2 et une glace externe 3. La glace interne 2 est également appelée « grande glace » en raison de sa longueur et la glace externe 3 « petite glace ». Les deux glaces interne 2 et externe 3 sont fixement maintenues l'une par rapport à l'autre à l'aide de deux entretoises 5. Chaque entretoise 5 est reliée à un flanc latéral 4 de manière fixe, c'est-à-dire que chaque entretoise 5 est rattachée à un flanc latéral 4, les deux flancs latéraux 4 reposant sur une embase centrale 6 à laquelle lesdits flancs latéraux 4 sont rattachés.

La figure 3 représente le même combineur 1 glace double que la figure 2, mails vu sous un autre angle. Les glaces interne 2 et externe 3 comportent respectivement des parties supérieures 22 et 32 qui sont les parties les plus éloignées de l'embase centrale 6 et qui sont chanfreinées aux niveau de leurs extrémités afin de diminuer le poids du combineur 1 glace double sans toutefois vignetter le champ instantané dans lequel peuvent s'afficher les images synthétiques vues par le pilote. Les parties supérieures 22 et 32 présentent respectivement des chanfreins 21 et 31 lesquels confèrent aux dites parties supérieures 22 et 32 un profil trapézoïdal. Le profil trapézoïdal de la glace externe 3 est positionné dans le prolongement du profil trapézoïdal de la glace interne 2 de manière à être caché par celui-ci à la vision du pilote. D'une entretoise 5 à l'autre, les dimensions respectives des glaces interne 2 et externe 3 sont les largeurs I₂ et I₃, tandis que la distance relative maintenue entre les glaces 2 et 3 par les entretoises 5 est l'écartement e. Dans un exemple numérique préférentiel, la largeur I₂ vaut environ 135mm, la largeur I₃ vaut 155mm, tandis que l'écartement e vaut environ 50mm. Pour le domaine spectral visible, le coefficient de réflexion de la glace externe 3 vaut par exemple environ 25%, tandis que la partie haute de la glace interne 2, celle qui est située entre l'oeil du pilote et la glace interne 2, est transparente non réfléchissante, la partie basse de la glace interne 2 ayant quant à elle un coefficient de réflexion valant par exemple environ 20%. Le matériau constituant le corps des glaces, les traitements superficiels étant non compris, est avantageusement du verre optique standard ressurfacé. L'angle existant entre le plan moyen des glaces 2 et 3 et le plan moyen de l'embase centrale 6 vaut préférentiellement environ 45 degrés.

Sur la figure 3, les glaces 2 et 3 sont enserrées entre deux entretoises 5. La glace externe 3 est enserrée entre les extrémités libres 51 des deux entretoises 5. La glace interne 2 est enserrée entre les extrémités 52, reliées aux flancs latéraux 4, des entretoises 5. La limite fonctionnelle entre entretoise 5 et flancs latéral 4 est indiquée par des traits pointillés p sur la figure 3. Les extrémités, 51 libres ou 52 reliées aux flancs latéraux 4, comportent avantageusement des trous 53 servant à l'injection de colle entre les glaces 2 et 3 et les entretoises 5 lors du montage du combineur 1 glace double.

De préférence, la partie centrale de chaque entretoise se présente sous la forme d'une plaque pleine, afin d'améliorer la rigidité de la structure de maintien des glaces du combineur glace double. Avantageusement, chaque plaque pleine présente des nervures situées vers l'extérieur du combineur glace double, afin d'améliorer la rigidité de la structure de maintien des glaces. L'orientation des nervures vers l'extérieur du combineur glace double contribue, pour une faible part, à la diminution du masque visuel global de la structure de maintien des glaces.

Sur la figure 3, la partie centrale 54 de chaque entretoise 5 se présente sous la forme d'une plaque pleine. La plaque pleine 54 comporte des nervures 55 situées vers l'extérieur du combineur 1 glace double. Chaque flanc latéral 4 présente une surface intérieure 41 située vers l'intérieur du combineur 1 glace double et une surface extérieure 42 située vers l'extérieur du combineur 1 glace double. A l'intersection de la surface extérieure 42 et de la surface 43 constituée par l'épaisseur libre de chaque flanc latéral 4 se trouve une arête 44 représentée en traits pointillés sur la figure 3.

De préférence, les plans moyens des flancs latéraux sont sensiblement orthogonaux au plan moyen des glaces et chaque flanc latéral est au moins partiellement chanfreiné au niveau d'une arête située à l'intersection entre la surface, située vers l'extérieur du combineur glace double, parallèle au plan moyen dudit flanc latéral, dudit flanc latéral et la surface constituée par l'épaisseur libre dudit flanc latéral. Ces chanfreins permettent de diminuer le masque visuel global de la structure de maintien des glaces d'encore 10% supplémentaires, amenant la réduction totale du masque visuel global de la structure de maintien des glaces à environ 70% du masque visuel global que présentent les combineurs glace double standard de l'art antérieur. Avantageusement, la surface, située vers l'intérieur du combineur, de chaque flanc latéral, est au moins partiellement chanfreinée au niveau de la pointe, située au niveau des parties de l'embase et de l'entretoise reliée audit flanc latéral qui sont les plus proches l'une de l'autre, dudit flanc latéral. Ceci amène une légère diminution supplémentaire du masque visuel de la structure de maintien des glaces.

Sur la figure 3, l'arête 44 est virtuelle, car chaque flanc latéral 4 présente un chanfrein 45 allant de l'arête 46 qui appartient à la surface 43 de l'épaisseur libre du flanc latéral 4 jusqu'à l'arête 47 de la surface extérieure 42. La surface intérieure 41 de chaque flanc latéral 4 est également chanfreinée au niveau de sa pointe 48 située entre d'une part l'extrémité 52, rattachée au flanc latéral 4, de l'entretoise 5 et d'autre part la partie 61, qui est la plus proche de l'entretoise 5, de l'embase centrale 6. L'embase 6 présente préférentiellement un trou 62 au travers duquel passent les faisceaux lumineux véhiculant les informations synthétiques collimatées à l'infini et provenant du viseur tête haute. Le ou les chanfreins que comporte chaque flanc latéral 4 permettent de réduire le masque visuel que présentent pour le pilote les flancs latéraux 4. Toutefois, grâce aux chanfreins, surtout 45, que comportent les flancs latéraux 4, d'une part la lentille habituellement placée dans le trou 62 n'est pas obturée et d'autre part la structure de maintien des glaces ne déborde pas de l'encombrement admis pour le combineur 1 glace double, ce qui pourrait être le cas dans le cas d'une simple inclinaison des flancs latéraux 4 sans partie chanfreinée.

De préférence, l'angle existant entre le plan moyen de chacune des entretoises et la normale au plan moyen des glaces est compris entre 5 et 15 degrés. Cet angle vaut par exemple environ 10 degrés sur la figure 3.

De préférence, le rapport entre d'une part la différence entre la dimension, d'une entretoise à l'autre, de la glace externe et celle de la glace interne et d'autre part la somme entre la dimension, d'une entretoise à l'autre, de la glace externe et celle de la glace interne, est compris entre 5% et 10%. Dans l'exemple numérique préférentiel décrit ci-dessus en liaison avec la figure 3, ce rapport vaut environ 7%, c'est-à-dire (155mm-135mm)/(155mm+135mm).

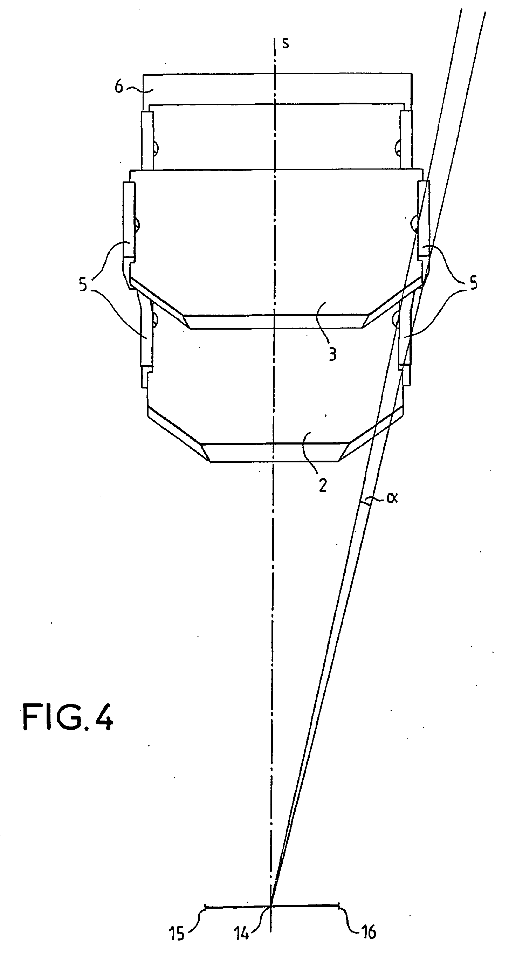

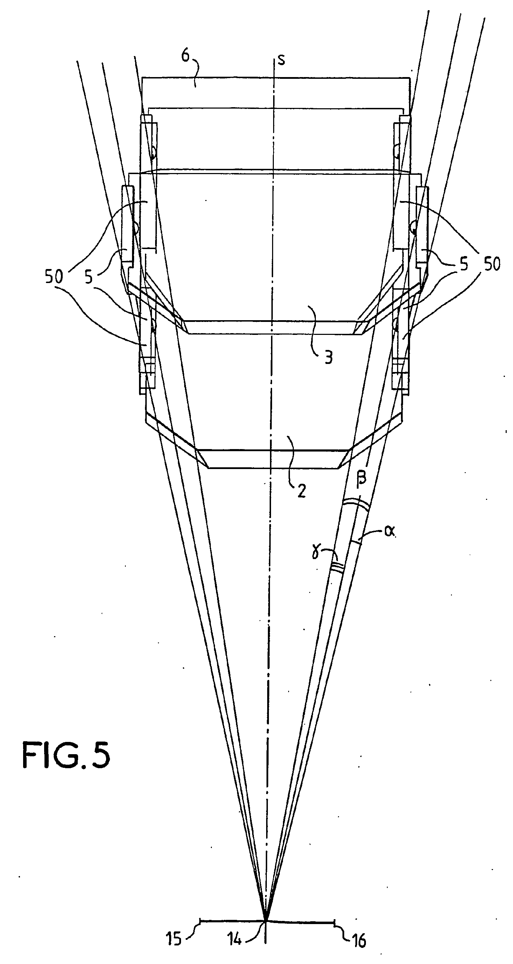

Les figures 4 et 5 représentent schématiquement des vues de dessus d'un combineur selon l'invention, mettant en évidence la diminution du masque visuel vu par le pilote qui a été obtenue. Un élément virtuel, dit « oeil de cyclope » et numéroté 14 sur les figures 4 et 5, est considéré ; l'oeil de cyclope 14 est la moyenne entre les deux yeux, gauche 15 et droit 16, d'un pilote. Le plan orthogonal aux figures 4 ou 5 et passant par l'axe s est le plan de symétrie de l'ensemble constitué par les glaces 2 et 3, les flancs latéraux 4 et les entretoises 5 du combineur 1 glace double selon l'invention. Le masque visuel global vu par l'oeil de cyclope 14 est représentatif du masque visuel vu par les deux yeux du pilote dans une configuration réelle. Les masques visuels angulaires globaux considérés dans la suite de ce paragraphe sont les masques visuels angulaires dans le plan des figures 4 et 5, c'est-à-dire en azimut pour le pilote. Dans le cas d'un combiner glace double selon l'invention, le demi masque visuel angulaire global de la structure de maintien des glaces vu par l'oeil de cyclope 14 vaut α. Dans le cas d'un combineur glace double standard de l'art antérieur, les glaces 2 et 3 sont maintenus par des entretoises 50 placées dans le prolongement direct des flancs latéraux 4 non visibles sur les figures 4 et 5. La dimension, d'une entretoise 50 à l'autre, est la même pour les glaces 2 et 3. Le demi masque visuel angulaire global vu par l'oeil de cyclope 14 vaut alors β. La réduction de masque visuel angulaire global relative obtenue par la substitution d'un combineur glace double selon l'invention à un combineur glace double standard de l'art antérieur vaut 2γ/2β=2(β-α)/2γ et peut atteindre 60% pour des dimensions usuelles de flancs latéraux 4 et d'entretoises 5.

De préférence, la structure de maintien est constituée de trois pièces monobloc distinctes entre elles, deux entretoises et un montant, le montant regroupant l'embase et les flancs latéraux. Ce découpage en trois pièces de la structure de maintien des glaces améliore la rigidité de l'ensemble du combineur glace double, une fois les glaces montées à l'intérieur de leur structure de maintien. Le matériau de la structure de maintien est avantageusement constitué par un alliage d'aluminium.

Le combineur glace double selon l'invention est destiné à être monté notamment sur des aéronefs. Les aéronefs peuvent être des avions civils ou militaires. Dans le cas d'un avion militaire où l'environnement vibratoire est sévère, le combineur glace double selon l'invention, particulièrement rigide, est particulièrement avantageux.

## Revendications

1. Combineur glace double pour viseur tête haute, comportant deux glaces (2, 3) sensiblement planes, sensiblement parallèles entre elles, et fixement maintenues entre elles par une structure de maintien (4, 5, 6) qui comprend une embase centrale (6), deux flancs latéraux (4) reliés à l'embase centrale (6), deux entretoises (5) respectivement reliées aux flancs latéraux (4) et enserrant entre elles les deux glaces (2, 3), une glace externe (3) étant enserrée entre les extrémités libres (51) des entretoises (5), une glace interne (2) étant enserrée entre les extrémités (52), reliées aux flancs latéraux (4), des entretoises (5), l'ensemble constitué par les glaces (2, 3), les flancs latéraux (4) et les entretoises (5), présentant un plan de symétrie sensiblement orthogonal au plan moyen des glaces (2, 3), **caractérisé en ce que** la dimension (I₃), d'une entretoise (5) à l'autre, de la glace externe (3) est plus grande que la dimension (I₂), d'une entretoise (5) à l'autre, de la glace interne (2), et **en ce que** le plan moyen de chaque entretoise (5) est non orthogonal au plan moyen des glaces (2, 3).

2. Combineur selon la revendication 1, **caractérisé en ce que** les plans moyens des flancs latéraux (4) sont sensiblement orthogonaux au plan moyen des glaces (2, 3) et **en ce que** chaque flanc latéral (4) est au moins partiellement chanfreiné au niveau d'une arête (44) située à l'intersection entre la surface (42), située vers l'extérieur du combineur (1), parallèle au plan moyen dudit flanc latéral (4), dudit flanc latéral (4) et la surface (43) constituée par l'épaisseur libre dudit flanc latéral (4).

3. Combineur selon la revendication 2, **caractérisé en ce que** la surface (41), située vers l'intérieur du combineur (1), de chaque flanc latéral (4), est au moins partiellement chanfreinée au niveau de la pointe (48), située au niveau des parties (61, 52) de l'embase (6) et de l'entretoise (5) reliée audit flanc latéral (4) qui sont les plus proches l'une de l'autre, dudit flanc latéral (4).

4. Combineur selon l'une quelconque des revendications précédentes, **caractérisé en ce que** la structure de maintien (4, 5, 6) est constituée de trois pièces monobloc distinctes entre elles, deux entretoises (5) et un montant (6, 4), le montant regroupant l'embase centrale (6) et les flancs latéraux (4).

5. Combineur selon l'une quelconque des revendications précédentes, **caractérisé en ce que** la partie centrale (54) de chaque entretoise (5) se présente sous la forme d'une plaque pleine.

6. Combineur selon la revendication 5, **caractérisé en ce que** chaque plaque pleine (54) présente des nervures (55) situées vers l'extérieur du combineur (1).

7. Combineur selon l'une quelconque des revendications précédentes, **caractérisé en ce que** l'angle existant entre le plan moyen de chacune des entretoises (5) et la normale au plan moyen des glaces (2, 3) est compris entre 5 et 15 degrés.

8. Combineur selon l'une quelconque des revendications précédentes, **caractérisé en ce que** le rapport entre d'une part la différence entre la dimension (I₃), d'une entretoise (5) à l'autre, de la glace externe (3) et celle (I₂) de la glace interne (2) et d'autre part la somme entre la dimension (I₃), d'une entretoise (5) à l'autre, de la glace externe (3) et celle (I₂) de la glace interne (2), est compris entre 5% et 10%.

9. Combineur selon l'une quelconque des revendications précédentes, **caractérisé en ce que** le matériau de la structure de maintien (4, 5, 6) est un alliage d'aluminium.

## Claims

1. Double-plate combiner for a head-up visor, comprising two substantially flat plates (2, 3), substantially parallel to each other and held fixedly together by a holding structure (4, 5, 6) which comprises a central baseplate (6), two side flanks (4) connected to the central baseplate (6), two spacers (5) respectively connected to the side flanks (4) and tightly holding the two plates (2, 3) between them, an outer plate (3) being tightly held between the free ends (51) of the spacers (5), an inner plate (2) being tightly held between the ends (52), connected to the side flanks (4), of the spacers (5), the assembly consisting of the plates (2, 3), the side flanks (4) and the spacers (5) having a plane of symmetry substantially orthogonal to the mid-plane of the plates (2, 3), **characterized in that** the dimension (I₃), from one spacer (5) to the other, of the outer plate (3) is greater than the dimension (I₂), from one spacer (5) to the other, of the inner plate (2), and **in that** the mid-plane of each spacer (5) is not orthogonal to the mid-plane of the plates (2, 3).

2. Combiner according to Claim 1, **characterized in that** the mid-planes of the side flanks (4) are substantially orthogonal to the mid-plane of the plates (2, 3), and **in that** each side flank (4) is at least partly chamfered at one edge (44) located at the intersection between the surface (42), located toward the outside of the combiner (1), parallel to the mid-plane of said side flank (4), of said side flank (4) and the surface (43) consisting of the free thickness of said side flank (4).

3. Combiner according to Claim 2, **characterized in that** the surface (41), located toward the inside of the combiner (1), of each side flank (4) is at least partly chamfered at the point (48), located at the parts (61, 52) of the baseplate (6) and of the spacer (5) connected to said side flank (4) which are closest to each other, of said side flank (4).

4. Combiner according to any one of the preceding claims, **characterized in that** the holding structure (4, 5, 6) consists of three parts made in one piece and separate from each other, two spacers (5) and an upright (6, 4), the upright bringing the central baseplate (6) and the side flanks (4) together.

5. Combiner according to any one of the preceding claims, **characterized in that** the central part (54) of each spacer (5) is in the form of a solid sheet.

6. Combiner according to Claim 5, **characterized in that** each solid sheet (54) has ribs (55) located toward the outside of the combiner (1).

7. Combiner according to any one of the preceding claims, **characterized in that** the angle existing between the mid-plane of each of the spacers (5) and the normal to the mid-plane of the plates (2, 3) is between 5 and 15 degrees.

8. Combiner according to any one of the preceding claims, **characterized in that** the ratio of, on the one hand, the difference between the dimension (I₃), from one spacer (5) to the other, of the outer plate (3) and that (I₂) of the inner plate (2) to, on the other hand, the sum of the dimension (I₃), from one spacer (5) to the other, of the outer plate (3) and that (I₂) of the inner plate (2) is between 5% and 10%.

9. Combiner according to any one of the preceding claims, **characterized in that** the material of the holding structure (4, 5, 6) is an aluminum alloy.

## Patentansprüche

1. Doppelte Glasplatte für Head-Up-Visiervorrichtung, die zwei im Wesentlichen flache, im Wesentlichen zueinander parallele und miteinander fest durch eine Haltestruktur (4, 5, 6) gehaltene Glasplatten (2, 3) aufweist, die eine zentrale Basis (6), zwei seitliche Flanken (4), die mit der zentralen Basis (6) verbunden sind, zwei Abstandshalter (5), die jeweils mit den seitlichen Flanken (4) verbunden sind und zwischen sich die zwei Platten (2, 3) einklemmen, aufweist, wobei eine äußere Platte (3) zwischen den freien Enden (41) der Abstandshalter (5) eingeklemmt ist, und wobei eine innere Platte (2) zwischen den Enden (52), die mit den seitlichen Flanken (4), der Abstandshalter (5), verbunden sind, eingeklemmt ist, wobei die aus den Platten (2, 3), den seitlichen Flanken (4) und den Abstandshaltern (5) gebildete Einheit eine im Wesentlichen zu der Mittelebene der Platten (2, 3) orthogonale Symmetrieebene bildet, **dadurch gekennzeichnet, dass** das Maß (I₃) von einem Abstandshalter (5) zum anderen der äußeren Platte (3) größer ist als das Maß (I₂) von einem Abstandshalter (5) zum anderen der inneren Platte (2), und dass die Mittelebene jedes Abstandshalters (5) zu der Mittelebene der Platten (2, 3) nicht orthogonal ist.

2. Doppelte Glasplatte nach Anspruch 1, **dadurch gekennzeichnet, dass** die Mittelebenen der seitlichen Flanken (4) im Wesentlichen orthogonal zu der Mittelebene der Platten (2, 3) sind, und dass jede seitliche Flanke (4) mindestens teilweise auf dem Niveau einer Kante (44), die an der Schnittstelle zwischen der Fläche (42), die zur Außenseite der doppelten Glasplatte (1), parallel zu der Mittelebene der seitlichen Flanke (4), der seitlichen Flanke (4) und der Fläche (43), die aus der freien Stärke der seitlichen Flanke (4) besteht, liegt, teilweise abgefast ist.

3. Doppelte Glasplatte nach Anspruch 2, **dadurch gekennzeichnet, dass** die Fläche (41), die zur Innenseite der doppelten Glasplatte (1) jeder seitlichen Flanke (4) liegt, zumindest teilweise auf dem Niveau der Spitze (48), die auf dem Niveau der Teile (61, 52) der Basis (6) und des Abstandhalters (5), der mit der seitlichen Flanke (4), die einander am nächsten liegen, der seitlichen Flanke (4) verbunden ist, liegt, zumindest teilweise abgefast ist.

4. Doppelte Glasplatte nach einem der vorhergehenden Ansprüche, **dadurch gekennzeichnet, dass** die Haltestruktur (4, 5, 6) aus drei voneinander getrennten einstückigen Teilen, zwei Abstandshaltern (5) und einem Pfeiler (6, 4) besteht, wobei der Pfeiler die zentrale Basis (6) und die seitlichen Flanken (4) gruppiert.

5. Doppelte Glasplatte nach einem der vorhergehenden Ansprüche, **dadurch gekennzeichnet, dass** der zentrale Teil (54) jedes Abstandshalters (5) die Form einer massiven Platte hat.

6. Doppelte Glasplatte nach Anspruch 5, **dadurch gekennzeichnet, dass** jede massive Glasplatte (54) Rippen (55) aufweist, die zur Außenseite der doppelten Glasplatte (1) liegen.

7. Doppelte Glasplatte nach einem der vorhergehenden Ansprüche, **dadurch gekennzeichnet, dass** der Winkel zwischen der Mittelebene jedes der Abstandshalter (5) und der Senkrechten zu der Mittelebene der Platten (2, 3) zwischen 5 und 15 Grad beträgt.

8. Doppelte Glasplatte nach einem der vorhergehenden Ansprüche, **dadurch gekennzeichnet, dass** das Verhältnis zwischen einerseits dem Unterschied zwischen dem Maß (I₃) von einem Abstandshalter (5) zum anderen der externen Platte (3) und dem Maß (I₂) der inneren Platte (2) und andererseits der Summe aus dem Maß (I₃) von einem Abstandshalter (5) zum anderen der externen Glasplatte (3) und dem (1₂) der internen Glasplatte (2) zwischen 5 % und 10 % liegt.

9. Doppelte Glasplatte nach einem der vorhergehenden Ansprüche, **dadurch gekennzeichnet, dass** der Werkstoff der Haltestruktur (4, 5, 6) eine Aluminiumlegierung ist.
